# EUROPÄISCHE PATENTSCHRIFT

(11) **EP 2 163 495 B1**
(45) Veröffentlichungstag und Bekanntmachung des Hinweises auf die Patenterteilung: **12.09.2012**
(21) Anmeldenummer: 09010382.1
(22) Anmeldetag: 12.08.2009
(51) Int. Cl.: B65G 13/04, B65G 13/073, B65G 47/26

(54) **Rollenförderer mit Antriebswellenbaugruppe**
Roller transporter with drive shafts module
Transporteur à rouleaux avec module d'arbres à entraînement

(30) Priorität: 10.09.2008 DE 102008046520
(43) Veröffentlichungstag der Anmeldung: 17.03.2010
(73) Patentinhaber: Robert Bosch GmbH, 70469 Stuttgart (DE)
(72) Erfinder: Willi, Marco, 71726 Benningen am Neckar (DE); Porzer, Volker, 73666 Baltmannsweiler (DE); Buttau, Hans-Peter, 74348 Lauffen (DE); Ludwig, Peter, 72072 Tübingen (DE); Lindemann, Uwe, 71088 Holzgerlingen (DE)
(74) Vertreter: Maiß, Harald

(56) Entgegenhaltungen:
- EP-A1- 0 129 911

## Beschreibung

Die Erfindung betrifft einen Rollenförderer gemäß dem Oberbegriff von Anspruch 1.

Aus der DE 195 24 308 A1 ist ein Rollenförderer bekannt. Gemäß der Fig. 3 der DE 195 24 308 A1 umfasst der Rollenförderer mehrere Förderrollen 3, die parallel zueinander in einer Reihe angeordnet sind, so dass sie eine Förderfläche definieren. Auf dieser Förderfläche werden üblicherweise plattenartige Werkstückträger transportiert, die wiederum die zu fördernden Werkstücke oder sonstiges Fördergut tragen. Die Förderrollen sind an ihren Endbereichen mit einer ersten und einer zweiten Lagerbaugruppe 4a drehbar verbunden. Im Bereich der zweiten Lagerbaugruppe ist jeweils ein erstes Antriebsrad in Form eines Kegelzahnrades 8 vorgesehen, das fest mit der zugeordneten Förderrolle verbunden ist, wobei es mit einem zweiten Antriebsrad in Form des Kegelzahnrades 8a in Drehantriebsverbindung steht. Die zweiten Antriebsräder sind auf einer gemeinsamen Antriebswelle angeordnet, so dass alle Förderrollen durch die Antriebswelle in Drehbewegung versetzt werden können.

Die zweiten Lagerbaugruppen sind jeweils lösbar an einem Gestell in Form eines Aluminium-Profils mit hinterschnittenen T-förmigen Nuten befestigt, wobei sie in jeder beliebigen Stellung an dem Gestell befestigt werden können. Damit die Lagerbaugruppen auch gegenüber der Antriebswelle verschiebbar sind, ist diese als Sechskantwelle ausgeführt, wobei die zugeordneten zweiten Antriebsräder einen angepassten Durchbruch aufweisen, so dass sie drehfest und längsbeweglich mit der Antriebswelle verbunden sind.

Der Nachteil des bekannten Förderers besteht darin, dass zur Montage bzw. Demontage der Antriebswelle sehr viel Platz in Förderrichtung vor oder hinter dem Förderer erforderlich ist, da die Antriebswelle zu dessen Zweck aus allen zweiten Lagerbaugruppen in Förderrichtung heraus geschoben werden muss. Dies ist besonders nachteilig, wenn eine Förderrolle beispielsweise aufgrund eines Lagerdefektes gewechselt werden muss. Hierzu muss in jedem Fall die Antriebswelle außer Eingriff mit der entsprechenden zweiten Lagerbaugruppe gebracht werden, so dass diese vom Gestell demontiert werden kann. Das Verschieben der Antriebswelle beim betriebsfertigen Förderer ist aber in vielen Fällen nicht möglich, da dieser oft in einer größeren Fertigungsstraße integriert ist, so dass um den Förderer herum wenig Platz vorhanden ist.

Gemäß dem selbstständigen Anspruch 1 wird vorgeschlagen, dass die Antriebswelle drehbar mit einer dritten Lagerbaugruppe verbunden ist, die gesondert von der ersten und der zweiten Lagerbaugruppe ausgebildet ist, so dass eine Antriebswellenbaugruppe bestehend aus der Antriebswelle, den zweiten Antriebsrädern und der zugeordneten dritten Lagerbaugruppe als Ganzes lösbar mit dem Rollenförderer verbunden werden kann und vorzugsweise lösbar verbunden ist. Die Antriebswelle kann also mit allen darauf vorgesehenen zweiten Antriebsrädern und den zugeordneten Drehlagern montiert bzw. demontiert werden, ohne dass eine Verschiebung der Antriebswelle in Förderrichtung notwendig ist. Zur Demontage müssen alle dritten Lagerbaugruppen, die der Antriebswelle zugeordnet sind von dem Gestell gelöst werden, so dass die Antriebswellenbaugruppe als gesonderte Baueinheit vorliegt und dementsprechend als Ganzes vom Rollenförderer entfernt werden kann. Als erste und zweite Antriebsräder werden bevorzugt die bekannten Kegelzahnräder eingesetzt, da deren Antriebseingriff bei der Montage bzw. Demontage besonders einfach hergestellt bzw. aufgehoben werden kann.

Die erste und die zweite Lagerbaugruppe ist lösbar an einem Gestell befestigt , wobei die dritte Lagerbaugruppe lösbar an der zweiten Lagerbaugruppe befestigt ist. Hierdurch soll eine besonders einfache und gleichzeitig genaue Ausrichtung zwischen den ersten und den zweiten Antriebsrädern ermöglicht werden. Bei dieser Ausführungsform ist bevorzugt daran gedacht, ein Gestell in Form eines bekannten T-Nuten Profils zu verwenden, damit die Förderrollen in jeder beliebigen Position an dem Gestell montiert werden können. Dementsprechend können an dem Gestell keine besonderen Ausrichtkonturen für die daran zu montierenden Teile vorgesehen sein, da deren Lage nicht von vorneherein fest steht. Würde man die dritte Lagerbaugruppe unmittelbar an einem derartigen Gestell montieren, wäre ein erheblicher Ausrichtaufwand notwendig, um die ersten und zweiten Antriebsräder in eine Relativstellung zu bringen, die einen verschleiß- und geräuscharmen Antrieb ermöglicht. Demgegenüber können die zweite und die dritte Lagerbaugruppe problemlos mit Ausrichtkonturen versehen werden, da deren relative Lage immer gleich ist, unabhängig davon, wie groß der Abstand zwischen zwei aufeinander folgenden Förderrollen ist. Überdies können sie als Serienteile hergestellt werden, weshalb sie besonders kostengünstig sind.

In den Unteransprüchen sind vorteilhaft Weiterbildungen und Verbesserungen der Erfindung angegeben.

Die Antriebswelle kann aus mehreren gesonderten Antriebswellensegmenten bestehen, die in lösbarer Drehantriebsverbindung miteinander stehen. Die lösbare Drehantriebsverbindung zwischen den Antriebswellensegmenten wird bevorzugt über eine bekannte Kupplung, beispielsweise eine Klauenkupplung, hergestellt. Die einzelnen Antriebswellensegmente definieren Baugruppen, die wiederum als Ganzes montiert bzw. demontiert werden können. Aufgrund der geringeren Länge der Antriebswellensegmente gegenüber der gesamten Antriebswelle ist deren Handhabung bei Montage- und Demontagetätigkeiten wesentlich einfacher. Bevorzugt ist daran gedacht, die Länge der Antriebswellensegmente so zu wählen, dass diese von einer einzigen Person montiert bzw. demontiert werden können.

Die erste und die zweite Lagerbaugruppe können ein gesondertes Aufnahmeteil mit einer Aufnahmeausnehmung umfassen, welches lösbar an dem Gestell befestigt ist, wobei an beiden Endbereichen der Förderrolle ein gesondertes Drehlager vorgesehen ist, das in der Aufnahmeausnehmung lösbar aufgenommen ist, so dass eine Rollenbaugruppe bestehend aus einer Förderrolle und den zugeordneten Drehlagern als Ganzes lösbar an den zugeordneten Aufnahmeteilen befestigt ist. Hierdurch kann erreicht werden, dass eine einzelne Förderrolle demontiert werden kann, ohne dass zuvor die Antriebswelle demontiert werden muss. Darüber hinaus ist diese Ausgestaltung besonders kostengünstig. Bei dem Drehlager handelt es sich vorzugsweise um ein bekanntes Radialrillenkugellager, das mit einer Lebensdauerschmierung versehen ist. Das entsprechende Aufnahmeteil ist bevorzugt aus Aluminium im Druckgussverfahren hergestellt, so dass alle Konturen zur Aufnahme des Drehlagers weitgehend ohne zusätzliche Nachbearbeitung ausgeformt werden können.

Die Aufnahmeausnehmung kann im Wesentlichen U-förmig ausgebildet sein, wobei die Öffnung der U-Form vom Gestell weg weist. Auf diese Weise ist es besonders einfach möglich, die Förderrolle mit den beiden Drehlagern von dem Transportbereich des Rollenförderers her in die entsprechende Aufnahmeausnehmungen einzusetzen. Auch bei dieser Ausführungsform sind die ersten und die zweiten Antriebsräder bevorzugt als Kegelzahnräder ausgebildet, damit deren Antriebseingriff bei der Montage bzw. Demontage besonders einfach hergestellt bzw. aufgehoben werden kann.

Das Drehlager kann von einem Halteteil in der U-förmigen Ausnehmung gehalten werden, das in das zugeordnete Aufnahmeteil eingeschnappt ist. Diese Ausführungsform ist besonders kostengünstig und kann gleichzeitig besonders schnell montiert werden. Das Halteteil ist bevorzugt aus Kunststoff spritzgegossen, damit es eine für die Schnappverbindung ausreichende Elastizität aufweist. Anzumerken ist, dass die Halteteile aufgrund der Ausgestaltung der Aufnahmeteile eine reine Sicherungsfunktion aufweisen, d. h. beim Betrieb des Rollenförderers wirken normalerweise keine Lasten auf das Halteteil ein. Dementsprechend kann das Halteteil ohne Nachteil aus einem kostengünstigen Kunststoff hergestellt werden.

Die dritte Lagerbaugruppe kann lösbar an dem Aufnahmeteil befestigt sein, damit die oben genannten Vorteile bei der Ausrichtung der dritten Lagerbaugruppe erzielt werden können, ohne die Montage bzw. Demontage der Förderrolle zu behindern.

An der dritten Lagerbaugruppe kann wenigstens ein Haken vorgesehen sein, der in das Aufnahmeteil eingreifen kann. Durch diese Ausgestaltung wird die Montage der Antriebswellenbaugruppe vereinfacht, insbesondere wenn diese von nur einer Person montiert werden soll. Die entsprechende Person kann problemlos die Haken von wenigstens zwei dritten Lagerbaugruppen einer Antriebswellenbaugruppe in Eingriff mit den zugeordneten Aufnahmeteilen bringen, so dass die Antriebswellenbaugruppe in ihrer endgültigen Einbauposition gehalten wird. Anschließend werden die dritten Lagerbaugruppen fest, beispielsweise mittels Schrauben, mit den zugeordneten Aufnahmeteilen verbunden, ohne dass während dieser Tätigkeit die Antriebswellenbaugruppe festgehalten werden muss. Die Haken sind vorzugsweise so ausgestaltet, dass die Drehbeweglichkeit der dritten Lagerbaugruppen gegenüber der Antriebswelle zur Herstellung des Halteeingriffs ausgenutzt werden kann. In diesem Fall ist es besonders bevorzugt, wenn die Ausrichtkontur zwischen einem Aufnahmeteil und der zugeordneten dritten Lagerbaugruppe in Form einer Nut- und Federverbindung ausgeführt ist, die so angeordnet ist, dass sie die Drehbeweglichkeit der dritten Lagerbaugruppe gegenüber der Antriebswelle nicht behindert. Diese Ausgestaltung hat überdies den Vorteil, dass die Ausrichtung der dritten Lagerbaugruppe bezüglich der Antriebswelle vereinfacht wird.

Die Aufnahmeteile der ersten und der zweiten Lagerbaugruppe können identisch ausgeführt sein, wobei sie um 180° gedreht zueinander angeordnet sind. Dementsprechend können größere Stückzahlen der Aufnahmeteile hergestellt werden, wodurch die Herstellkosten sinken. Diese Ausgestaltung ist insbesondere deshalb möglich, weil die dritte Lagerbaugruppe gesondert von der zweiten Lagerbaugruppe ausgeführt ist. Dementsprechend kann am Aufnahmeteil der ersten Lagerbaugruppe einfach auf die Montage einer dritten Lagerbaugruppe verzichtet werden.

Es kann wenigstens eine U-förmige Abdeckung vorgesehen sein, die in mehrere benachbarte Aufnahmeteile eingeschnappt ist. Die U-förmige Abdeckung ist bevorzugt als Aluminium-Strangpressprofil ausgeführt. Sie dient primär dazu, die Drehlager an den Förderrollen vor Umgebungseinflüssen zu schützen. Es ist aber auch möglich, dass die Antriebswelle wenigstens abschnittsweise innerhalb der U-förmigen Abdeckung angeordnet ist, so dass die Antriebswelle und insbesondere die Antriebsräder vor Umgebungseinflüssen geschützt sind. Die Schnappverbindung an den Aufnahmeteilen kann besonders kostengünstig hergestellt werden, da die Aufnahmeteile ohnehin in großen Stückzahlen, bevorzugt im Aluminiumdruckgussverfahren, hergestellt sind. Dementsprechend können die zusätzlichen Rastelemente nahezu ohne Mehrkosten vorgesehen werden.

Zwischen zwei benachbarten Aufnahmeteilen kann ein plattenartiges Verschlussteil vorgesehen sein, so dass die Aufnahmeteile zusammen mit den Verschlussteilen eine im Wesentlichen ununterbrochene Wandfläche bilden. Mit den Verschlussteilen sollen die verbleibenden Öffnungen verschlossen werden, die nicht von der obigen U-förmigen Abdeckung erfasst werden. Die Verschlussteile sind plattenartig ausgeführt, damit sie besonders einfach auf die dem Förderrollenabstand entsprechende Länge zugeschnitten werden können. Wie bereits erwähnt, ist der vorliegende Rollenförderer so aufgebaut, dass der Abstand der Rollen stufenlos verstellt werden kann. Gleichzeitig sollen so viele Teile wie möglich als Serienteile hergestellt werden, wobei nur möglichst wenige Teile abhängig von dem Förderrollenabstand ausgeführt sind. Die zuletzt genannten Teile sollen möglichst schnell herstellbar sein, damit sie erst kurz vor Fertigstellung des Förderers hergestellt werden können, wodurch auf eine aufwändige Lagerhaltung verzichtet werde kann. Die plattenartigen Verschlusselemente werden vorzugsweise in einer Nut der zugeordneten Aufnahmeteile gehalten, da diese besonders einfach im Aluminiumdruckgussverfahren herzustellen ist.

Es kann wenigstens eine Seitenführungsleiste vorgesehen sein, welche die Förderfläche seitlich begrenzt, wobei die Seitenführungsleiste an den Aufnahmeteilen befestigt ist. Es ist bekannt, Rollenförderer mit einer Seitenführung für die Werkstückträger zu versehen. Diese Seitenführung kann besonders einfach an den Aufnahmeteilen befestigt werden, da diese problemlos mit entsprechenden Haltemitteln ausgestattet werden kann, die an diesem Serienteil besonders kostengünstig vorgesehen werden können. Bei der Seitenführung handelt es sich vorzugsweise um ein Aluminiumstrangpressprofil, das mit einem austauschbaren Reibbelag für die Werkstückträger versehen ist, der vorzugsweise aus Kunststoff oder Stahl besteht.

Ein Freiraum zwischen zwei Förderrollen kann von wenigstens einer Abdeckung verschlossen sein, die im Wesentlichen parallel zur Förderebene angeordnet ist, wobei die Abdeckung an wenigstens einem Aufnahmeteil, vorzugsweise allen Aufnahmeteilen der angrenzenden Förderrollen, befestigt ist. Es ist bekannt, bei Rollenförderern Abdeckungen zwischen den Förderrollen vorzusehen, um zu verhindern, dass Teile zwischen den Förderrollen hindurch fallen. Die serienmäßigen Aufnahmeteile können einfach und kostengünstig mit entsprechenden Haltemitteln ausgestattet werden, die eine problemlose und schnelle Befestigung der Abdeckungen ermöglichen. Bevorzugt ist daran gedacht, die Abdeckungen aus Blech herzustellen, wobei an den Aufnahmeteilen Rastmittel vorgesehen sind, in die die Bleche eingeschnappt werden können.

Die Erfindung wird im Folgenden anhand der beigefügten Zeichnungen näher erläutert. Es stellt dar:
- Fig. 1: eine perspektivische Ansicht eines modulartigen Abschnitts eines erfindungsgemäßen Rollenförderers, der mit einem Motor ausgestattet ist;
- Fig. 2: eine Explosionsansicht eines modulartigen Abschnitts eines erfindungsgemäßen Rollenförderers, der nicht mit einem Motor ausgestattet ist;
- Fig. 3: eine erste Explosionsansicht der zweiten und dritten Lagerbaugruppe mit der Antriebsbaugruppe;
- Fig. 3a: eine zweite Explosionsansicht der zweiten und dritten Lagerbaugruppe mit der Antriebsbaugruppe gemäß Fig. 3;
- Fig. 4: eine Explosionsansicht einer Antriebsbaugruppe mit der zugeordneten dritten Lagerbaugruppe;
- Fig. 4a: einen Querschnitt der Baugruppe gemäß Fig. 4;
- Fig. 5: eine perspektivische Ansicht des Aufnahmeteils;
- Fig. 6: eine Explosionsansicht einer zweiten Lagerbaugruppe, die mit einem dritten Antriebsrad ausgestattet ist;
- Fig. 7: eine Vorderansicht des Antriebsmoduls gemäß Fig. 1; und
- Fig. 7a: einen vergrößerten Ausschnitt von Fig. 7 im Bereich der Antriebswelle.

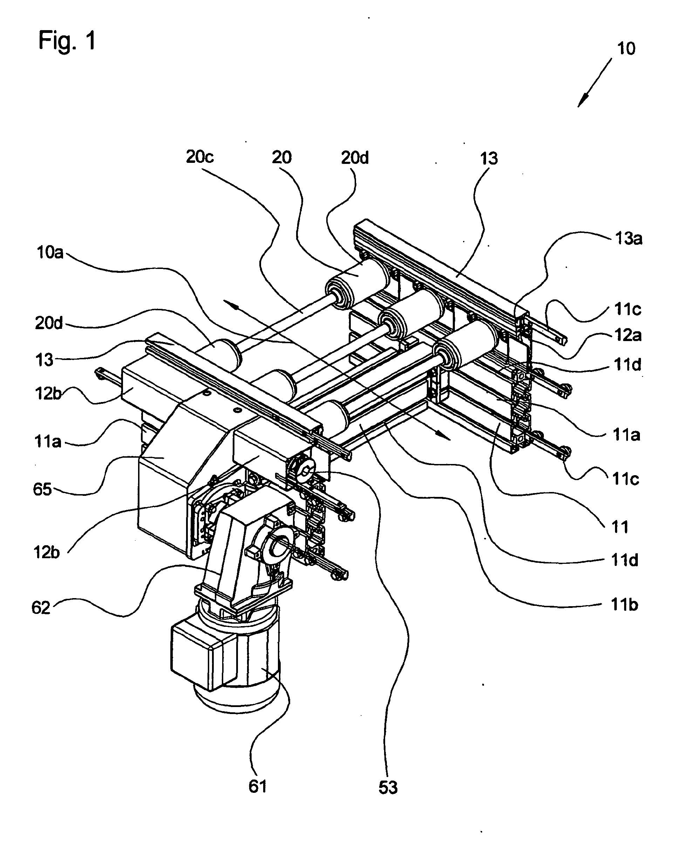

Fig. 1 zeigt einen modulartigen Abschnitt eines Rollerförderers 10, der dazu bestimmt ist mit weiteren ähnlichen Modulen die gesamte Förderstrecke zu bilden. Da dieses Modul mit einem Motor 61 zum Antrieb der Förderrollen 20 ausgestattet ist, wird es als Antriebsmodul bezeichnet.

Das Antriebsmodul umfasst ein Gestell 11 mit zwei parallelen Längsträgern 11 a, die sich parallel zur Förderrichtung 10a erstrecken und die über einen Querträger 11b miteinander verbunden sind. Die Längsträger 11a und der Querträger 11b sind jeweils aus Aluminium stranggepresst, wobei an ihren Außenoberflächen eine Vielzahl von hinterschnittenen, T-förmigen Nuten 11d vorgesehen sind, an denen andere Bauteile in unterschiedlichen, kontinuierlich veränderlichen Positionen befestigt werden können. An den stirnseitigen Enden der Längsträger 11a sind in den hinterschnittenen Nuten mehrere Verbindungsleisten 11c aufgenommen, mit denen aneinander angrenzende Module des Rollenförderers fest miteinander verbunden werden können.

An der Oberseite der Längsträger 11a sind mehrere parallele Förderrollen 20 jeweils an beiden Enden drehbar gelagert. Die Förderrollen umfassen jeweils eine Rollenachse 20c aus Stahl, an deren beiden Endbereichen je ein Auflageabschnitt 20d mit einer kreiszylindrischen Oberfläche vorgesehen ist. Der Auflagerabschnitt besteht aus einem Kunststoffkern an dessen Oberfläche eine Stahlhülse als Verschleißschutz vorgesehen ist. Die Auflageabschnitte 20d definieren eine ebene Förderfläche, in der das Fördergut in Form eines plattenartigen (nicht dargestellten) Werkstückträgers bewegt werden kann. Seitlich wird die Förderfläche durch zwei Seitenführungsleisten 13 begrenzt, die mit einem auswechselbaren Reibbelag 13a aus Kunststoff oder Stahl versehen sind, an dem die Werkstückträger entlang gleiten. Die Seitenführungsleisten 13 sind ebenfalls aus Aluminium stranggepresst.

An einer Seitenfläche eines Längsträgers 11a ist ein Elektromotor 61 vorgesehen, der über ein Zahnradgetriebe 62 und einen Zahnriementrieb mit einer Antriebswelle in Drehantriebsverbindung steht. Da die Antriebswelle von einer Abdeckung 12b abgedeckt ist, ist von der Antriebswelle in Fig. 1 nur die Klauenkupplung 53 an deren Ende zu erkennen, mit der die Drehantriebsverbindung zu der Antriebswelle des angrenzenden Moduls des Rollenförderers hergestellt wird. Die Kraftübertragung von der Antriebswelle auf die Förderrollen 20 wird weiter unten noch näher erläutert. Der Zahnriementrieb ist in Fig. 1 ebenfalls nicht zu erkennen, da er aus Sicherheitsgründen von der Riemenabdeckung 65 abgedeckt ist. Hinzuweisen ist noch auf die Abdeckung 12a auf der der Antriebswelle gegenüber liegenden Seite. Die beiden Abdeckungen 12a und 12b sind jeweils aus Aluminium stranggepresst und besitzen eine im Wesentlichen U-förmige Querschnittsform, wobei sie sich nur bezüglich der Länge der U-Schenkel unterscheiden.

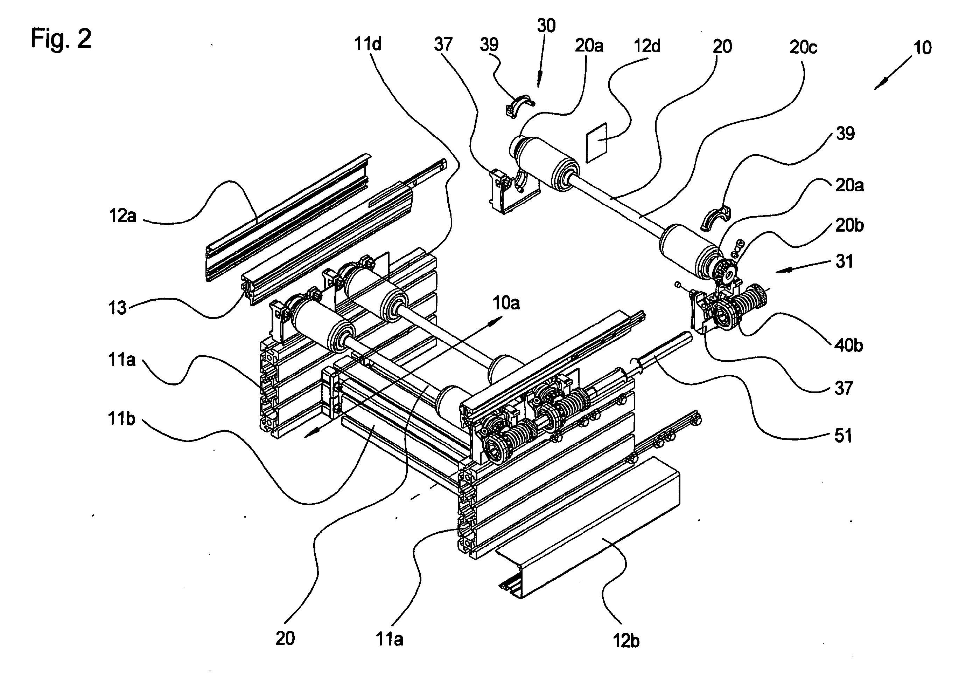

Fig. 2 zeigt ein weiteres Modul des erfindungsgemäßen Rollenförderers 10, das nicht mit einem Antriebsmotor ausgestattet ist. Man spricht daher auch von einem Streckenmodul. Das Streckenmodul gemäß der Fig. 2 ist bis auf den fehlenden Antrieb identisch mit dem Antriebsmodul gemäß Fig. 1 ausgeführt. Dementsprechend sind identisch ausgeführte Teile mit den gleichen Bezugsziffern versehen. Bezüglich der identischen Teile wird auf die vorstehenden Ausführungen verwiesen, um Wiederholungen zu vermeiden.

Gemäß Fig. 2 sind die Förderrollen 20 jeweils mit einem ersten Antriebsrad 20b in Form eines Kegelzahnrads ausgestattet, welches unmittelbar an der Rollenachse 20c drehfest befestigt ist. Jedem ersten Antriebsrad 20b ist ein zweites Antriebsrad 40b zugeordnet, das ebenfalls als Kegelzahnrad ausgeführt ist. Um einen geräusch- und verschleißarmen Zahnradeingriff zu gewährleisten, besteht das erste Antriebsrad 20b aus Polyoxymethylen (POM), während das zweite Antriebsrad 40b aus Polyamid (PA) oder Sintermetall besteht oder umgekehrt. Alle zweiten Antriebsräder 40b sind auf einer gemeinsamen Antriebswelle 51 angeordnet, die die gleiche Länge aufweist wie das zugeordnete Modul des Rollenförderers 10. Auf den Drehantriebseingriff zwischen den zweiten Antriebsrädern 40b und der Antriebswelle 51 wird weiter unten noch näher eingegangen. Die Antriebswelle 51 ist genau senkrecht zu den zugeordneten parallelen Förderrollen 20 ausgerichtet, wobei sich deren Drehachsen jeweils in einem Punkt schneiden.

Die Drehlagerung der Förderrollen 20 wird dadurch bewerkstelligt, dass an beiden Endbereichen der Förderrolle 20 auf der Rollenachse 20c jeweils ein Drehlager 20a in Form eines Radialrillenkugellagers vorgesehen ist, das mit einer Lebensdauerschmierung versehen ist. Die Drehlager 20a sind jeweils in einem gesonderten Aufnahmeteil 37 aufgenommen, das an einer hinterschnittenen Nut 11d des Längsträgers 11 a in jeder beliebigen Stellung bezüglich der Förderrichtung 10a befestigt werden kann. Die beiden Aufnahmeteile 37, die einer Förderrolle 20 zugeordnet sind, sind jeweils identisch ausgeführt und um 180° gedreht zueinander angeordnet. Zwischen zwei benachbarten Aufnahmeteilen 37 ist jeweils ein plattenartiges Verschlussteil 12d vorgesehen, so dass die Aufnahmeteile 37 mit den zugeordneten Verschlussteilen 12d eine geschlossene Wand bilden, die jeweils gemeinsam mit den Abdeckungen 12a oder 12b einen im Wesentlichen vollständig abgeschlossenen Raum umschließen, in dem die zugeordneten Lagerungs- und Antriebskomponenten geschützt vor Umgebungseinflüssen aufgenommen sind.

Hinzuweisen ist noch darauf, dass die zweite Lagerbaugruppe 31 von dem Aufnahmeteil 37 auf der Seite der Antriebswelle 51, dem zugeordneten Drehlager 20a und dem entsprechenden Halteteil 39 gebildet wird. Die erste Lagerbaugruppe 30 wird von den entsprechenden Teilen auf der gegenüber liegenden Seite der Förderrolle 20 gebildet.

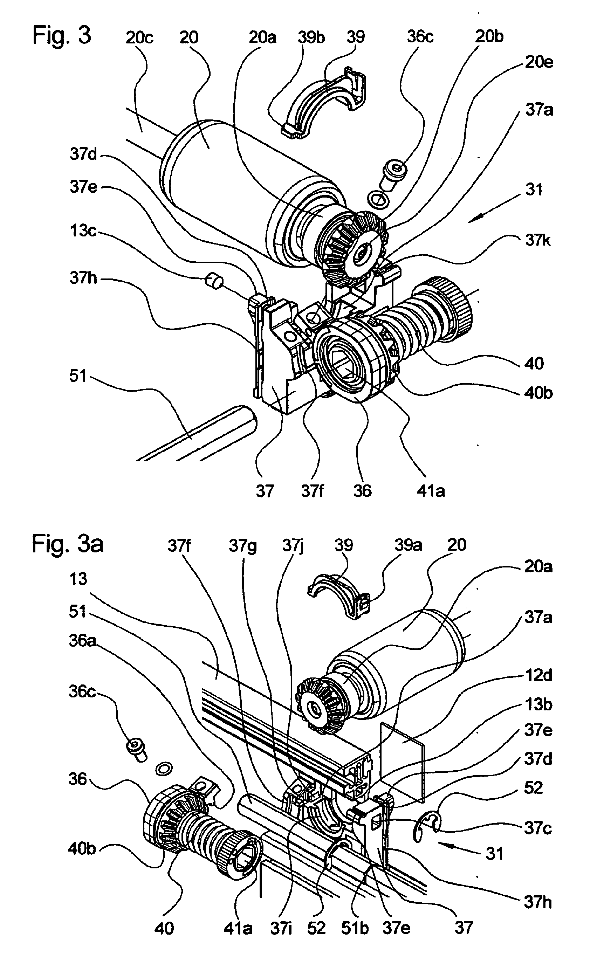

Fig. 3 zeigt einen vergrößerten Ausschnitt von Fig. 2 mit der zweiten Lagerbaugruppe 31, der dritten Lagerbaugruppe 36 und der Antriebsbaugruppe 40. Fig. 3a zeigt die gleiche Anordnung aus einer anderen Blickrichtung.

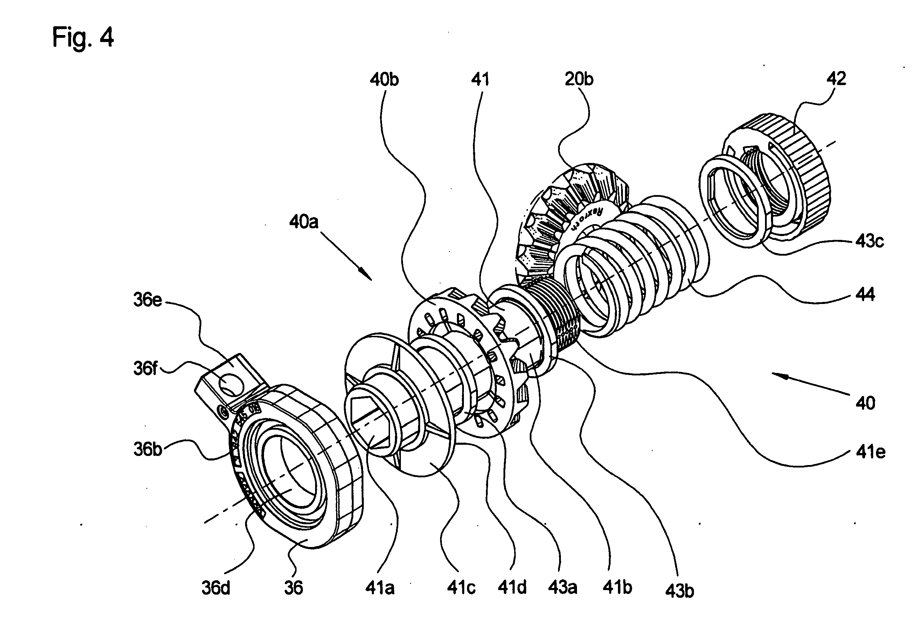

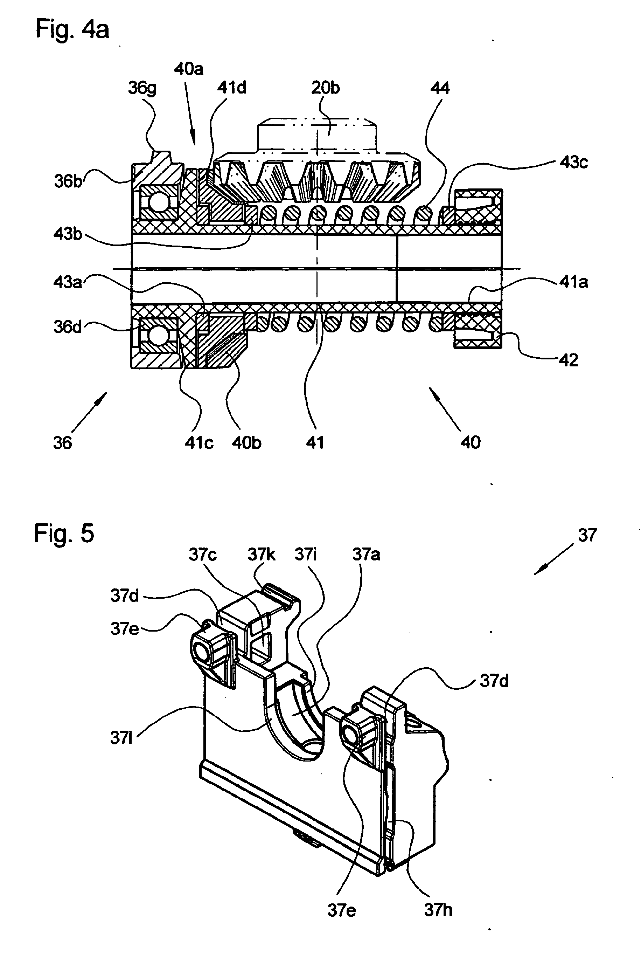

Die Antriebsbaugruppe 40 mit dem zweiten Antriebsrad 40b ist über die dritte Lagerbaugruppe 36 lösbar mit dem Aufnahmeteil 37 der zweiten Lagerbaugruppe 31 verbunden, wobei die genannten Baugruppen über den Schraubbolzen 36c aneinander befestigt sind. An dem Aufnahmeteil 37 ist eine Nut 37f vorgesehen, in die ein angepasster Ausrichtfortsatz (Nr. 36g in Fig. 4a) an der dritten Lagerbaugruppe 36 zum Zwecke der gegenseitigen Ausrichtung eingreift. Die Nut 37f verläuft kreisförmig gebogen um die Drehachse der Antriebswelle 51 herum, damit die dritte Lagerbaugruppe 36 frei um die genannte Drehachse gedreht werden kann, auch wenn sich die Antriebswelle 51 bereits in ihrer Einbauposition befindet. An der dritten Lagerbaugruppe 36 ist ein Haken 36a vorgesehen, der in eine angepasste Ausnehmung 37g an dem Aufnahmeteil 37 eingehakt werden kann. Bei der Montage des Rollenförderers werden dementsprechend zuerst die dritten Lagerbaugruppen 36 mit den zugeordneten Antriebsbaugruppen 40 auf die Antriebswelle 51 aufgeschoben, so dass sich eine Antriebswellenbaugruppe ergibt. Die Antriebsbaugruppe ist hierfür mit einem sechseckigen Durchbruch 41 a versehen, der so an die sechseckige Querschnittsform der Antriebswelle 51 angepasst ist, dass einerseits eine formschlüssige Drehantriebsverbindung und gleichzeitig die gewünschte Längsverschiebbarkeit zwischen der Antriebsbaugruppe 40 und der Antriebswelle 51 gegeben ist. Die genannte Antriebswellenbaugruppe wird nun mit Hilfe der Haken 36a in die entsprechenden Aufnahmeteile 37 eingehakt, so dass sie in der gewünschten Endbauposition gehalten ist. Normalerweise ist es ausreichend, nur zwei bezüglich der Antriebswelle 51 endseitige Haken 36a einzuhaken, damit ein ausreichender Halt vorhanden ist. Die dritten Lagerbaugruppen 36 können nun um die Drehachse der Antriebswelle 51 herum in ihre Einbaulage gedreht und mit den zugeordneten Aufnahmeteilen 37 verschraubt werden. Nach dem Abschluss dieser Arbeit wird die Lage der Antriebswelle, die bezüglich der Antriebsbaugruppe 40 längsverschiebbar ist, mit Positioniermitteln in Form von zwei Sicherungsscheiben 52 gesichert. Die Sicherungsscheiben 52 werden hierfür in entsprechende Nuten 51b eingeschnappt, die an der Antriebswelle 51 vorgesehen sind, wobei die Antriebswelle 51 mit einer Vielzahl derartiger Nuten, deren Lage an die vorgegebenen Abstandsmaße der Förderrollen 20 angepasst sind, ausgestattet ist.

In Fig. 3 und 3a sind weiter die Nuten 37h zur Aufnahme der plattenartigen Verschlussteile 12d zu erkennen. Weiter sind die Aufnahmenuten 37d zur Aufnahme des Befestigungssteges 13b der Seitenführung 13 zu erkennen, die an den Stirnseiten der U-Schenkel des insgesamt U-förmigen Aufnahmeteils 37 vorgesehen sind. Die Seitenführung 13 wird in diesen Aufnahmenuten 37d mit Hilfe der Gewindestifte 13c gesichert. Der zugeordnete Innengewindeabschnitt am Aufnahmeteil 37 dient gleichzeitig als Gegenrastmittel 37e für entsprechende Rastmittel an (nicht dargestellten) Abdeckungen zwischen den Förderrollen 20. Hinzuweisen ist noch auf die Rastnasen 37k für die seitlichen Abdeckungen (Nr. 12a und 12b in Fig. 2). Das Aufnahmeteil 37 ist aus Aluminium im Druckgussverfahren hergestellt, um die vielen Befestigungskonturen kostengünstig bereitstellen zu können.

In Fig. 3 und Fig. 3a ist weiter die Aufnahmeausnehmung 37a des Aufnahmeteils 37 zur Aufnahme der Drehlager 20a an der Förderrolle 20 zu erkennen. Die Aufnahmausnehmung 37a ist beidseitig mit Borden 37i versehen, die eine Verschiebung des Drehlagers in Richtung der Drehachse der zugeordneten Förderrolle 20 verhindern. Die Öffnung der Aufnahmeausnehmung 37a wird von einem Halteteil 39 aus Kunststoff verschlossen, das die angesprochenen Aufnahmekonturen für das Drehlager 20a an dem Aufnahmeteil 37 zur vollen Kreisform fortsetzt. Das Halteteil ist mit einem elastischen Schnapphaken 39a versehen, der in einen angepassten Durchbruch 37c eingeschnappt wird. An der gegenüberliegenden Seite ist das Halteteil 39 mit einem im Wesentlichen starren Haltefortsatz 39b versehen, der in eine angepasste Ausnehmung 37j so eingreift, dass das Halteteil 39 bezüglich des Aufnahmeteils 37 um wenigstens 30° verkippt werden kann, wodurch eine einfache Montage des Halteteils 39 ermöglicht wird. Das erste Antriebsrad 20b ist an der Rollenachse 20c mit einer Befestigungsschraube 20e befestigt, wobei an der Stirnseite der Rollenachse 20c zwei (nicht sichtbare) Schlüsselflächen vorgesehen sind, die einen formschlüssigen Eingriff zwischen dem ersten Antriebsrad 20b und der zugeordneten Rollenachse 20c herstellen

Fig. 4 zeigt eine Explosionsansicht der Antriebsbaugruppe 40 mit der zugeordneten dritten Lagerbaugruppe 36. Fig. 4a zeigt die genannten Baugruppen im Querschnitt.

Die dritte Lagerbaugruppe 36 umfasst ein Basisbauteil 36b aus Aluminium-Druckguss, in das ein Lebensdauer geschmiertes Radialrillenkugellager 36d als Drehlager für die Antriebsbaugruppe 40 eingebaut ist. An dem Basisbauteil 36b ist ein Befestigungsfortsatz 36e mit einer Befestigungsbohrung 36f für den oben genannten Schraubbolzen (Nr. 36c in Fig. 3). Hinzuweisen ist noch auf den in Fig. 4a sichtbaren Ausrichtfortsatz 36g, der in die Nut (Nr. 37f in Fig. 3) des Aufnahmeteils eingreift.

Die Antriebsbaugruppe 40 umfasst eine im Wesentlichen kreiszylindrische Hülse 41, die aus faserverstärktem Polyamid spritzgegossen ist. An der Innenseite der Hülse ist ein Durchbruch 41 a mit einem sechseckigen Querschnitt vorgesehen, der so an die Antriebswelle angepasst ist, dass die Hülse 41 in Längsrichtung auf dieser verschiebbar ist, wobei gleichzeitig eine formschlüssige Drehantriebsverbindung gegeben ist. An der Außenumfangsfläche der Hülse 41 ist ein Flansch 41 c einstückig vorgesehen, zu dessen in Fig. 4 linken Seite das Drehlager 36d auf der Hülse 41 so montiert ist, dass die Antriebsbaugruppe 40 als Ganzes in die dritte Lagerbaugruppe 36 eingebaut werden kann. Die in Fig. 4 rechte Seitenfläche des Flansches dient als Abstützfläche 41 d für die Spannkraft, die von der Schraubenfeder 44 auf das zweite Antriebsrad 40b und die Gleitringe 43a; 43b ausgeübt wird. An der Außenumfangsfläche der Hülse 41 sind insgesamt drei identische Gleitringe 43a; 43b und 43c aus Polyoxymethylen (POM) oder Sintermetall vorgesehen, die über zwei gegenüberliegende Schlüsselflächen 41 b drehfest und längsverschiebbar an der Hülse 41 gehalten sind. Der erste und der zweite Gleitring 43a; 43b dienen primär als Reibfläche für das zweite Antriebsrad 40b, so dass zusammen mit der Schraubenfeder 44 eine Rutschkupplung 40a gebildet wird. Das zweite Antriebsrad 40b ist hierbei so ausgelegt, dass es nicht am Flansch 41 c reibt, so dass ausschließlich der erste und der zweite Gleitring 43a; 43b das Grenzmoment der Rutschkupplung 40a definieren. Mit dem zweiten Gleitring 43b soll überdies verhindert werden, dass die Feder 44 von dem drehenden zweiten Antriebsrad 40b mitgenommen wird, so dass sie gegenüber der Hülse 41 immer still steht. Mit dem dritten Gleitring 43c wird verhindert, dass eine Drehbewegung des Anschlages 42 auf die Feder 44 übertragen wird. Der Anschlag 42 steht in Schraubeingriff mit einem Außengewinde 41 e an der Hülse 41, so dass er durch Verdrehen in Längsrichtung gegenüber der Hülse 41 verlagert werden kann, wodurch die Feder 44 gegen das zweite Antriebsrad 40b vorgespannt wird. Das Außengewinde 41e ist ein Feingewinde, so dass es selbsthemmend ist, damit sich der Anschlag 42 nicht von selbst löst.

Fig. 5 zeigt eine perspektivische Ansicht des Aufnahmeteils 37 aus der gegenüber Fig.3 und 3a entgegen gesetzten Richtung. Hinzuweisen ist an dieser Stelle nur auf die U-förmige Ausnehmung 371, die an die Achse der Förderrolle mit einem geringen Abstand angepasst ist, so dass das dahinter angeordnete Drehlager gut vor Umgebungseinflüssen geschützt ist. Im Übrigen wird auf die Ausführung zu Fig. 3 und 3a verwiesen, um Wiederholungen zu vermeiden.

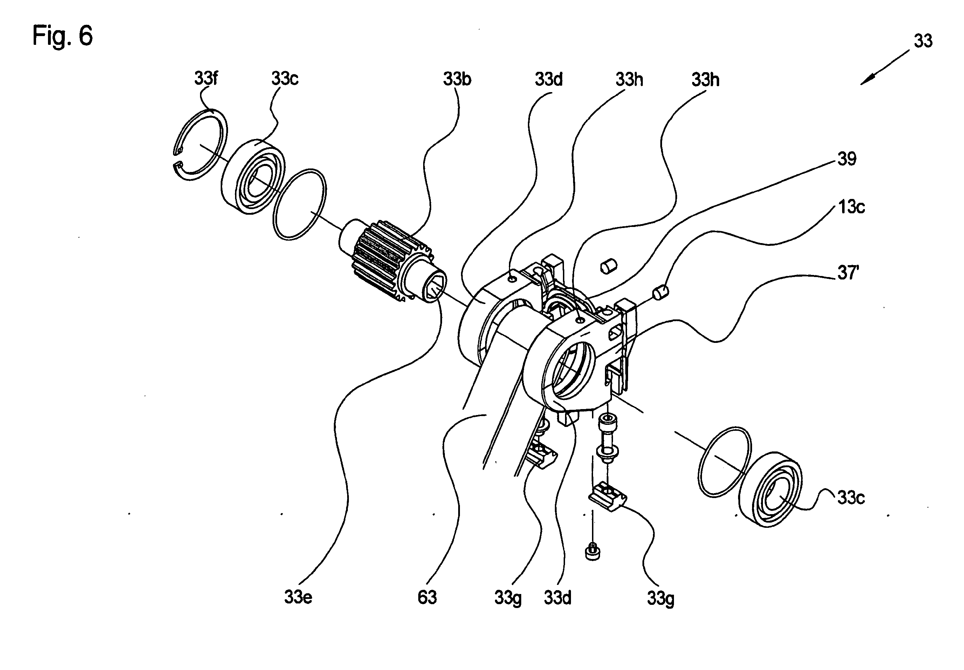

Fig. 6 zeigt eine zweite Lagerbaugruppe 33, die mit einem dritten Antriebsrad 33b ausgestattet ist. Hinsichtlich der Lagerung der (nicht dargestellten) Förderrolle und der Befestigung der angrenzenden Bauteile ist diese Lagerbaugruppe 33 genauso ausgeführt wie die zweite Lagerbaugruppe (Nr. 31 in Fig. 3 und Fig. 3a), die nicht mit einem dritten Antriebsrad versehen ist, so dass in dieser Hinsicht auf die vorstehenden Ausführungen verwiesen wird.

Das dritte Antriebsrad 33b dient zum Antrieb der Antriebswelle (Nr. 51 in Fig. 2). Es ist hierfür über ein Zugmittel 63 in Form eines Zahnriemens mit einem (nicht dargestellten) Elektromotor verbunden. Die Drehantriebsverbindung zur Antriebswelle wird wie bei der Antriebsbaugruppe (Nr. 40 in Fig. 4) über einen sechseckigen Durchbruch 33e im dritten Antriebsrad 33b hergestellt, so dass das dritte Antriebsrad 33b per Formschluss drehfest mit der Antriebswelle verbunden ist, wobei die Antriebswelle gleichzeitig zwecks deren einfacher Montage längsverschiebbar bezüglich dem dritten Antriebsrad 33b ist.

Das dritte Antriebsrad 33b ist in gerader Verlängerung der Förderrolle in dem Bereich angeordnet, an dem sich normalerweise das zweite Antriebsrad befindet. An dem Aufnahmeteil 37' sind hierfür zwei Lagerflansche 33d einstückig vorgesehen. In beiden Lagerflanschen 33d ist je ein Drehlager 33c in Form eines Lebensdauer geschmierten Radialrillenkugellagers aufgenommen, in dem das dritte Antriebsrad 33b und mithin die Antriebswelle drehbar gelagert sind. Im Übrigen ist das Aufnahmeteil 37' identisch mit dem Aufnahmeteil 37 ausgeführt. Die beidseitige Lagerung des dritten Antriebsrades 33b ist notwendig, damit die Drehlagerung den Zugkräften aufgrund der Spannung des Zahnriemens 63 über einen genügend langen Zeitraum stand hält. Die Baugruppe, bestehend aus dem dritten Antriebsrad 33b und den beiden zugeordneten Drehlagern 33c wird mit dem Sicherungsring 33f in der zweiten Lagerbaugruppe 33 gehalten. Mit den beiden Nutensteinen 33g wird die zweite Lagerbaugruppe 33 an den hinterschnittenen Nuten des zugeordneten Längsträgers befestigt. Die beiden Befestigungsgewinde 33h dienen zur Befestigung der Riemenabdeckung (Nr. 65 in Fig. 1).

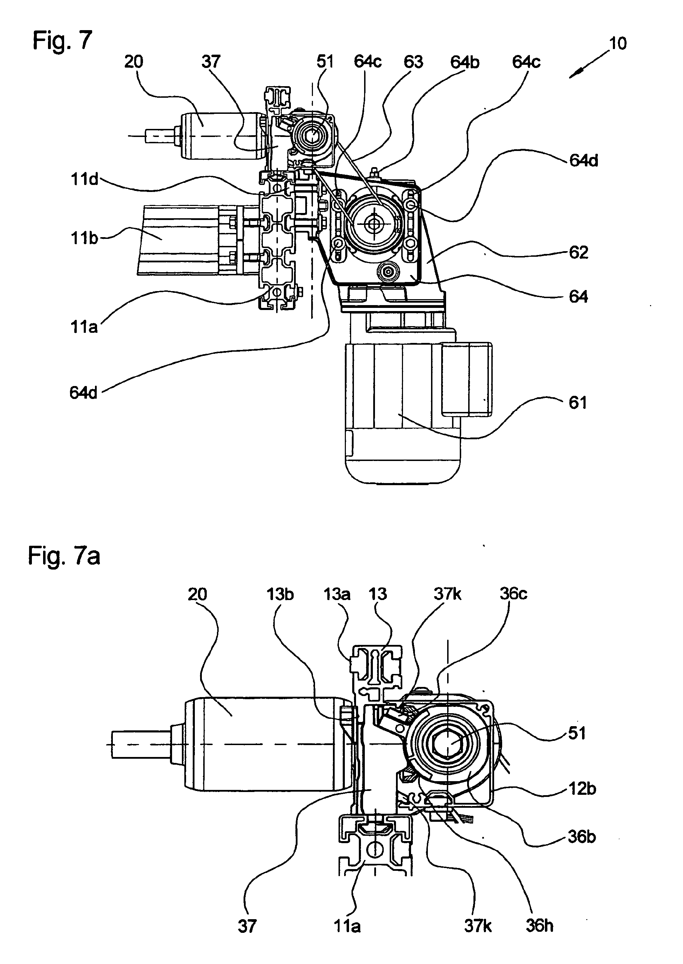

Fig. 7 zeigt eine Vorderansicht des Antriebsmoduls gemäß Fig. 1, wobei die Riemenabdeckung (Nr. 65 in Fig. 1) entfernt wurde. Zu erkennen ist der Motorflansch 64, mit dem der Elektromotor 61 einschließlich des Getriebes 62 an den hinterschnittenen Nuten 11d des Längsträgers 11a befestigt sind. Zur Festlegung der Lage des Motorflansches 64 am Längsträger 11a wird dieser solange in Förderrichtung verschoben, bis er am Aufnahmeteil 37 der zugeordneten zweiten Lagerbaugruppe anstößt. Die genannten Bauteile und der Motor 61 sind so aufeinander abgestimmt, dass der Zahnriemen 63 in dieser Stellung exakt senkrecht zur Drehachse der Antriebswelle 51 ausgerichtet ist. Der Motorflansch 64 ist mit zwei Langlöchern 64c ausgestattet, so dass der Motor 61 in unterschiedlichen Positionen am Motorflansch 64 befestigt werden kann. Mit Hilfe der Einstellschraube 64b wird der Motor 61 in die Position verschoben, in der der Zahnriemen 63 die geeignete Spannung aufweist.

Sodann wird der Motor 61 mit den Befestigungsschrauben 64d an dem Motorflansch 64 fest geschraubt.

Fig. 7a zeigt einen vergrößerten Ausschnitt von Fig. 7 im Bereich der sechseckigen Antriebswelle 51. Dieser Ansicht ist insbesondere zu entnehmen, wie die U-förmige Abdeckung 12b in die zugeordneten Rastnasen 37k am Aufnahmeteil 37 eingeschnappt ist. Weiter ist die Seitenführungsleiste 13 mit dem darin aufgenommenen Reibbelag 13a zu erkennen, der etwas über die Seitenführungsleiste 13 über steht, so dass der zugeordnete (nicht dargestellte) Werkstückträger nur mit dem Reibbelag 13a in Gleitkontakt steht. Darüber hinaus ist dargestellt, wie die Seitenführungsleiste 13 mit ihrem Befestigungssteg 13b in das Aufnahmeteil 37 eingesetzt ist. Hinzuweisen ist außerdem auf das Basisbauteil 36b mit seiner zur Antriebswelle 51 konzentrischen Außenumfangsfläche 36h, die es ermöglicht, die dritte Lagerbaugruppe bei entferntem Schraubbolzen 36c gegenüber der Antriebswelle 51 zu verdrehen, wobei die Außenumfangsfläche 36h gleichzeitig als Anlagefläche zum Aufnahmeteil 37 dient.

### Bezugszeichenliste

- 10: Rollenförderer
- 10a: Förderrichtung

- 11: Gestell
- 11a: Längsträger
- 11b: Querträger
- 11c: Verbindungsleiste
- 11d: hinterschnittene Nut

- 12a: U-förmige Abdeckung (passive Seite)
- 12b: U-förmige Abdeckung (Antriebsseite)
- 12d: plattenartiges Verschlussteil

- 13: Seitenführungsleiste
- 13a: Reibbelag
- 13b: Befestigungssteg
- 13c: Gewindestift

- 20: Förderrolle
- 20a: Drehlager
- 20b: erstes Antriebsrad
- 20c: Rollenachse
- 20d: Auflageabschnitte
- 20e: Befestigungsschraube

- 30: erste Lagerbaugruppe
- 31: zweite Lagerbaugruppe
- 33: zweite Lagerbaugruppe mit drittem Antriebsrad
- 33b: drittes Antriebsrad
- 33c: Drehlager für drittes Antriebsrad
- 33d: Lagerflansch
- 33e: Durchbruch
- 33f: Sicherungsring
- 33g: Nutensteine
- 33h: Befestigungsgewinde für Riemenabdeckung

- 36: dritte Lagerbaugruppe
- 36a: Haken
- 36b: Basisbauteil
- 36c: Schraubbolzen
- 36d: Drehlager
- 36e: Befestigungsfortsatz
- 36f: Befestigungsbohrung
- 36g: Ausrichtfortsatz
- 36h: Außenumfangsfläche

- 37: Aufnahmeteil
- 37': Aufnahmeteil mit Lagerflansch
- 37a: Aufnahmausnehmung
- 37c: Durchbruch für Schnapphaken
- 37d: Aufnahmenut für die Seitenführungsleiste
- 37e: Halte-/Rastmittel für eine Abdeckung zwischen den Rollen
- 37f: Ausrichtnut für dritte Lagerbaugruppe
- 37g: Ausnehmung für Haken
- 37h: Aufnahmenut für plattenartiges Verschlussteil
- 37i: Bord für Drehlager
- 37j: Aufnahmeausnehmung für Haltefortsatz am Halteteil
- 37k: Rastnase für die seitlichen Abdeckungen
- 371: Ausnehmung für Rollenachse
- 39: Halteteil
- 39a: Schnapphaken
- 39b: Haltefortsatz

- 40: Antriebsbaugruppe
- 40a: Rutschkupplung
- 40b: zweites Antriebsrad
- 41: Hülse
- 41a: Durchbruch
- 41b: Schlüsselfläche
- 41c: Flansch
- 41 d: Abstützfläche
- 41e: Außengewinde
- 42: Anschlag
- 43a: erster Gleitring
- 43b: zweiter Gleitring
- 43c: dritter Gleitring
- 44: Feder

- 51: Antriebswelle
- 51b: Nut für Sicherungsscheibe
- 52: Sicherungsscheibe
- 53: Klauenkupplung

- 61: Motor
- 62: Getriebe
- 63: Zugmittel
- 64: Motorflansch
- 64b: Einstellschraube
- 64c: Langlöcher
- 64d: Befestigungsschraube
- 65: Riemenabdeckung

## Patentansprüche

1. Rollenförderer (10) mit mehreren Förderrollen (20), die eine Förderfläche definieren, wobei die Förderrollen (20) an ihren Endbereichen drehbar mit einer ersten und einer zweite Lagerbaugruppe (30; 31; 33) verbunden sind, wobei wenigstens ein Teil der Förderrollen (20) an der zweiten Lagerbaugruppe (31) je ein erstes Antriebsrad (20b) aufweist, das mit je einem zweiten Antriebsrad (40b) in Drehantriebsverbindung steht, wobei die zweiten Antriebsräder (40b) auf einer drehbaren Antriebswelle (51) angeordnet sind, mit der sie in Drehantriebsverbindung stehen,
**dadurch gekennzeichnet, dass** die Antriebswelle (51) drehbar mit einer dritten Lagerbaugruppe (36) verbunden ist, die gesondert von der ersten und der zweiten Lagerbaugruppe (30; 31; 33) ausgebildet ist, so dass eine Antriebswellenbaugruppe bestehend aus der Antriebswelle (51), den zweiten Antriebsrädern (40b) und der zugeordneten dritten Lagerbaugruppe (36) als Ganzes lösbar mit dem Rollenförderer (10) verbunden werden kann und vorzugsweise lösbar verbunden ist, wobei die erste und die zweite Lagerbaugruppe (30; 31; 33) lösbar an einem Gestell (11) befestigt ist, wobei die dritte Lagerbaugruppe (36) lösbar an der zweiten Lagerbaugruppe (31) befestigt ist.

2. Rollenförderer nach Anspruch 1,
**dadurch gekennzeichnet, dass** die Antriebswelle (51) aus mehreren gesonderten Antriebswellensegmenten besteht, die in lösbarer Drehantriebsverbindung miteinander stehen.

3. Rollenförderer nach einem der vorstehenden Ansprüche,
**dadurch gekennzeichnet, dass** die erste und die zweite Lagerbaugruppe (30; 31; 33) ein gesondertes Aufnahmeteil (37) mit einer Aufnahmeausnehmung (37a) umfasst, welches lösbar an dem Gestell (11) befestigt ist, wobei an beiden Endbereichen der Förderrolle (20) ein gesondertes Drehlager (20a) vorgesehen ist, das in der Aufinahmeausnehmung (37a) lösbar aufgenommen ist, so dass eine Rollenbaugruppe bestehend aus einer Förderrolle (20) und den zugeordneten Drehlagern (20a) als Ganzes lösbar an den zugeordneten Aufnahmeteilen (37) befestigt ist.

4. Rollenförderer nach Anspruch 3,
**dadurch gekennzeichnet, dass** die Aufnahmeausnehmung (37a) im Wesentlichen U-förmig ausgebildet ist, wobei die Öffnung der U-Form vom Gestell (11) weg weist.

5. Rollenförderer nach Anspruch 4,
**dadurch gekennzeichnet, dass** das Drehlager (20a) von einem Halteteil (39) in der U-förmigen Ausnehmung (37a) gehalten wird, das in das zugeordnete Aufnahmeteil (37) eingeschnappt ist.

6. Rollenförderer nach einem der Ansprüche 3 bis 5,
**dadurch gekennzeichnet, dass** die dritte Lagerbaugruppe (36) lösbar an dem Aufnahmeteil (37) befestigt ist.

7. Rollenförderer nach einem der Ansprüche 3 bis 6,
**dadurch gekennzeichnet, dass** an der dritten Lagerbaugruppe (36) wenigstens ein Haken (36a) vorgesehen ist, der in das Aufnahmeteil (37) eingreifen kann.

8. Rollenförderer nach einem der Ansprüche 3 bis 7,
**dadurch gekennzeichnet, dass** die Aufnahmeteile (37) der ersten und der zweiten Lagerbaugruppe (30; 31) identisch ausgeführt sind, wobei sie um 180° gedreht zueinander angeordnet sind.

9. Rollenförderer nach einem der Ansprüche 3 bis 8,
**dadurch gekennzeichnet, dass** wenigstens eine U-förmige Abdeckung (12a; 12b) vorgesehen ist, die in mehrere benachbarte Aufnahmeteile (37) eingeschnappt ist.

10. Rollenförderer nach Anspruch 9,
**dadurch gekennzeichnet, dass** die Antriebswelle (51) wenigstens abschnittsweise innerhalb der U-förmigen Abdeckung (12b) angeordnet ist.

11. Rollenförderer nach einem der Ansprüche 3 bis 10,
**dadurch gekennzeichnet, dass** zwischen zwei benachbarten Aufnahmeteilen (37) ein plattenartiges Verschlussteil (12d) vorgesehen ist, so dass die Aufnahmeteile (37) zusammen mit den Verschlussteilen (12d) eine im Wesentlichen ununterbrochene Wandfläche bilden.

12. Rollenförderer nach einem der Ansprüche 3 bis 11,
**dadurch gekennzeichnet, dass** wenigstens eine Seitenführungsleiste (13) vorgesehen ist, welche die Förderfläche seitlich begrenzt, wobei die Seitenführungsleiste (13) an den Aufnahmeteilen (37) befestigt ist.

13. Rollenförderer nach einem der Ansprüche 3 bis 12,
**dadurch gekennzeichnet, dass** ein Freiraum zwischen zwei Förderrollen von wenigstens einer Abdeckung verschlossen wird, die im Wesentlichen parallel zur Förderebene angeordnet ist, wobei die Abdeckung an wenigstens einem Aufnahmeteil (37), vorzugsweise allen Aufnahmeteilen (37) der angrenzenden Förderrollen (20) befestigt ist.

## Claims

1. Roller conveyor (10) having a plurality of conveying rollers (20) which define a conveying surface, wherein the end regions of the conveying rollers (20) are connected in a rotatable manner to a first and a second bearing subassembly (30; 31; 33), wherein at least a part of the conveying rollers (20) has at the second bearing subassembly (31) a respective first drive wheel (20b) which is in rotary driving connection with a respective second drive wheel (40b), wherein the second drive wheels (40b) are arranged on a rotatable drive shaft (51) and are in rotary driving connection therewith,
**characterized in that** the drive shaft (51) is connected in a rotatable manner to a third bearing subassembly (36) which is formed separately from the first and the second bearing subassemblies (30; 31; 33), such that a drive shaft subassembly consisting of the drive shaft (51), the second drive wheels (40b) and the associated third bearing subassembly (36) can be connected releasably as a whole to the roller conveyor (10) and preferably is connected releasably thereto, wherein the first and the second bearing subassemblies (30; 31; 33) are fastened releasably to a frame (11), wherein the third bearing subassembly (36) is fastened releasably to the second bearing subassembly (31).

2. Roller conveyor according to Claim 1,
**characterized in that** the drive shaft (51) consists of a plurality of separate drive shaft segments which are connected together in releasable rotary driving connection.

3. Roller conveyor according to either of the preceding claims,
**characterized in that** the first and the second bearing subassemblies (30; 31; 33) comprise a separate receiving part (37) having a receiving cutout (37a), said receiving part (37) being fastened releasably to the frame (11), wherein at the two end regions of the conveying roller (20) there is provided a separate rotary bearing (20a) which is received releasably in the receiving cutout (37a), such that a roller subassembly consisting of a conveying roller (20) and the associated rotary bearings (20a) is fastened releasably as a whole to the associated receiving parts (37).

4. Roller conveyor according to Claim 3,
**characterized in that** the receiving cutout (37a) is formed in a substantially U-shaped manner, wherein the opening in the U shape faces away from the frame (11).

5. Roller conveyor according to Claim 4,
**characterized in that** the rotary bearing (20a) is held in the U-shaped cutout (37a) by a holding part (39) which is snap-fitted into the associated receiving part (37).

6. Roller conveyor according to one of Claims 3 to 5,
**characterized in that** the third bearing subassembly (36) is fastened releasably to the receiving part (37).

7. Roller conveyor according to one of Claims 3 to 6,
**characterized in that** on the third bearing subassembly (36) there is provided at least one hook (36a) which can engage in the receiving part (37).

8. Roller conveyor according to one of Claims 3 to 7,
**characterized in that** the receiving parts (37) of the first and the second bearing subassemblies (30; 31) are configured in an identical manner, wherein they are arranged in a manner rotated through 180° with respect to one another.

9. Roller conveyor according to one of Claims 3 to 8,
**characterized in that** there is provided at least one U-shaped cover (12a; 12b) which is snap-fitted into a plurality of adjacent receiving parts (37).

10. Roller conveyor according to Claim 9,
**characterized in that** the drive shaft (51) is arranged at least partly inside the U-shaped cover (12b).

11. Roller conveyor according to one of Claims 3 to 10,
**characterized in that** between two adjacent receiving parts (37) there is provided a platelike closure part (12d), such that the receiving parts (37) form together with the closure parts (12d) a substantially uninterrupted wall surface.

12. Roller conveyor according to one of Claims 3 to 11,
**characterized in that** there is provided at least one lateral guide strip (13) which laterally bounds the conveying surface, wherein the lateral guide strip (13) is fastened to the receiving parts (37).

13. Roller conveyor according to one of Claims 3 to 12,
**characterized in that** a free space between two conveying rollers is closed by at least one cover which is arranged substantially parallel to the conveying plane, wherein the cover is fastened to at least one receiving part (37), preferably to all receiving parts (37) of the adjacent conveying rollers (20).

## Revendications

1. Transporteur à rouleaux (10) comprenant plusieurs rouleaux de transport (20) qui définissent une surface de transport, les rouleaux de transport (20) étant connectés au niveau de leurs régions d'extrémité de manière rotative à un premier et à un deuxième module de palier (30 ; 31 ; 33), au moins une partie des rouleaux de transport (20) au niveau du deuxième module de palier (31) présentant à chaque fois une première roue d'entraînement (20b) qui est en liaison d'entraînement en rotation avec une deuxième roue d'entraînement respective (40b), les deuxièmes roues d'entraînement (40b) étant disposées sur un arbre d'entraînement rotatif (51) avec lequel elles sont en liaison d'entraînement en rotation,
**caractérisé en ce que** l'arbre d'entraînement (51) est connecté de manière rotative à un troisième module de palier (36) qui est réalisé de manière séparée du premier et du deuxième module de palier (30 ; 31 ; 33), de telle sorte qu'un module d'arbre d'entraînement constitué de l'arbre d'entraînement (51), des deuxièmes roues d'entraînement (40b) et du troisième module de palier associé (36) puisse être connecté et soit de préférence connecté de manière détachable en tant que tout au transporteur à rouleaux(10), le premier et le deuxième module de palier (30 ; 31 ; 33) étant fixés de manière détachable à un bâti (11), le troisième module de palier (36) étant fixé de manière détachable au deuxième module de palier (31).

2. Transporteur à rouleaux selon la revendication 1,
**caractérisé en ce que** l'arbre d'entraînement (51) se compose de plusieurs segments d'arbre d'entraînement séparés qui sont en liaison d'entraînement en rotation détachable les uns avec les autres.

3. Transporteur à rouleaux selon l'une quelconque des revendications précédentes,
**caractérisé en ce que** le premier et le deuxième module de palier (30 ; 31 ; 33) comprennent une partie de réception séparée (37) avec un évidement de réception (37a), laquelle est fixée de manière détachable au bâti (11), un palier pivotant séparé (20a) étant prévu sur les deux régions d'extrémité du rouleau de transport (20), lequel palier pivotant est reçu de manière détachable dans l'évidement de réception (37a), de telle sorte qu'un module de rouleau constitué d'un rouleau de transport (20) et des paliers pivotants associés (20a) soit fixé en tant que tout de manière détachable aux parties de réception associées (37).

4. Transporteur à rouleaux selon la revendication 3,
**caractérisé en ce que** l'évidement de réception (37a) est réalisé essentiellement en forme de U, l'ouverture de la forme en U étant tournée à l'opposé du bâti (11).

5. Transporteur à rouleaux selon la revendication 4,
**caractérisé en ce que** le palier pivotant (20a) est retenu par une partie de retenue (39) dans l'évidement en forme de U (37a), laquelle est encliquetée dans la partie de réception associée (37).

6. Transporteur à rouleaux selon l'une quelconque des revendications 3 à 5,
**caractérisé en ce que** le troisième module de palier (36) est fixé de manière détachable à la partie de réception (37).

7. Transporteur à rouleaux selon l'une quelconque des revendications 3 à 6,
**caractérisé en ce qu'**au moins un crochet (36a) est prévu sur le troisième module de palier (36), lequel peut venir en prise dans la partie de réception (37).

8. Transporteur à rouleaux selon l'une quelconque des revendications 3 à 7,
**caractérisé en ce que** les parties de réception (37) du premier et du deuxième module de palier (30 ; 31) sont réalisées de manière identique, et elles sont tournées de 180° l'une par rapport à l'autre.

9. Transporteur à rouleaux selon l'une quelconque des revendications 3 à 8,
**caractérisé en ce qu'**au moins un recouvrement en forme de U (12a ; 12b) est prévu, lequel est encliqueté dans plusieurs parties de réception adjacentes (37).

10. Transporteur à rouleaux selon la revendication 9,
**caractérisé en ce que** l'arbre d'entraînement (51) est disposé au moins en partie à l'intérieur du recouvrement en forme de U (12b).

11. Transporteur à rouleaux selon l'une quelconque des revendications 3 à 10,
**caractérisé en ce qu'**entre deux parties de réception adjacentes (37) est prévue une partie de fermeture de type plaque (12d), de sorte que les parties de réception (37) forment, conjointement avec les parties de fermeture (12d), une surface de paroi essentiellement ininterrompue.

12. Transporteur à rouleaux selon l'une quelconque des revendications 3 à 11,
**caractérisé en ce qu'**au moins une baguette de guidage latéral (13) est prévue, laquelle limite latéralement la surface de transport, la baguette de guidage latéral (13) étant fixée aux parties de réception (37).

13. Transporteur à rouleaux selon l'une quelconque des revendications 3 à 12,
**caractérisé en ce qu'**un espace libre entre deux rouleaux de transport est fermé par au moins un recouvrement, qui est disposé essentiellement parallèlement au plan de transport, le recouvrement étant fixé au niveau d'au moins une partie de réception (37), de préférence de toutes les parties de réception (47) des rouleaux de transport adjacents (20).
